# Europäisches Patentamt

# European Patent Office

# Office européen des brevets

(11) Veröffentlichungsnummer: **0 090 293**
**B1**

(12) ## EUROPÄISCHE PATENTSCHRIFT

(45) Veröffentlichungstag der Patentschrift:
16.09.87

(51) Int. Cl.⁴: **H 04 L 11/00, H 04 L 11/20**

(21) Anmeldenummer: **83102723.0**

(22) Anmeldetag: **18.03.83**

(54) **Verfahren und Schaltungsanordnung zum Übertragen von Nachrichtensignalen zwischen mit unterschiedlichen Übertragungsprozeduren arbeitenden Vermittlungsstellen eines ersten Vermittlungsnetzes und eines zweiten Vermittlungsnetzes.**

(30) Priorität: **22.03.82 DE 3210439**

(43) Veröffentlichungstag der Anmeldung:
**05.10.83 Patentblatt 83/40**

(45) Bekanntmachung des Hinweises auf die Patenterteilung:
**16.09.87 Patentblatt 87/38**

(84) Benannte Vertragsstaaten:
**AT CH DE GB IT LI SE**

(56) Entgegenhaltungen:
**EP - A - 0 017 035**

**INTERNATIONAL SWITCHING SYMPOSIUM, Montreal 21.-25. September 1981, "Session 31 C, paper 2", Seiten 1-5 H. VAN KAMPEN: "Interconnection of the teletex-, telex- and other services"**
**INTERNATIONAL SWITCHING SYMPOSIUM, Paris, 7.-11. Mai 1979, "Session 21 B", Seiten 356-361 A. VON KIENLIN: "Requirements and functions of terminal interface processors in public packet switching networks"**
**INTERNATIONAL SWITCHING SYMPOSIUM, Montreal, 21.-25. September 1981, "Session 32 C, paper 4", Seiten 1-7 N. CORSI u.a.: "Design and performance of subscriber of access equipment for packet switched networks"**

(73) Patentinhaber: **Siemens Aktiengesellschaft Berlin und München, Wittelsbacherplatz 2, D-8000 München 2 (DE)**

(72) Erfinder: **Hagen, Rolf, Dipl.-Ing., Fasanenstrasse 38, D-8025 Unterhaching (DE)**
Erfinder: **Weidner, Peter, Dipl.-Ing., Passauer Strasse 23, D-8000 München 71 (DE)**

(56) Entgegenhaltungen: (Fortsetzung)
**PROCEEDINGS OF THE FIFTH INTERNATIONAL CONFERENCE ON COMPUTER COMMUNICATION, Atlanta, 27.-30. Oktober 1980, Seiten 57-62 R. HAGEN: "Internetting techniques for different text communication services and the interworking of text communication networks"**

**Beschreibung**

Die Erfindung betrifft eine Schaltungsanordnung zum Übertragen von durch Datensignale und/oder Signalisierungsinformationen gebildeten Nachrichtensignalen zwischen Teilnehmerstellen, die über Vermittlungsstellen eines mit einer ersten Übertragungsprozedur arbeitenden ersten Vermittlungsnetzes und eines über eine Umsetzeinrichtung mit dem ersten Vermittlungsnetz verbundenen, mit einer von der ersten Übertragungsprozedur verschiedenen zweiten Übertragungsprozedur arbeitenden zweiten Vermittlungsnetzes verbunden sind, wobei sich die Übertragungsprozeduren der an einer Verbindung beteiligten Vermittlungsnetze aus die Datensignale enthaltenden netzunabhängigen Prozedurteilen und aus zumindest die Signalisierungsinformationen enthaltenden netzabhängigen, mit Hilfe der Umsetzeinrichtung umzusetzenden Prozedurteilen zusammensetzen, und wobei zumindest das zweite Vermittlungsnetz auf seinen Übertragungsleitungen die Übertragung von Nachrichtensignalen in Form von Paketen gestattet.

Eine derartige Schaltungsanordnung ist bereits aus der Druckschrift «Proceedings of the Fifth International Conference on Computer Communication», Atlanta, 27. bis 30. Oktober 1980, Seiten 57 bis 62 bekannt. Diese Druckschrift befasst sich in einer Übersicht unter anderem mit der Übertragung von Nachrichtensignalen zwischen mit unterschiedlichen Übertragungsprozeduren arbeitenden Fernmeldenetzen. Dabei wird unter Bezugnahme auf das ISO-Schichtenmodell ausgeführt, dass mit Hilfe einer Umsetzeinrichtung die niedrigen netzabhängigen Schichten dieses Modells bei einer Übertragung von Nachrichtensignalen umzusetzen sind, während die höheren netzunabhängigen Schichten unbeeinflusst bleiben. Dieser Druckschrift sind dabei jedoch keine Hinweise darauf zu entnehmen, wie eine derartige Umsetzeinrichtung auszubilden ist.

Darüber hinaus ist bereits eine Schaltungsanordnung zum Übertragen von digitalen Signalen zwischen mit unterschiedlichen Datenübertragungsprozeduren und mit unterschiedlichen Datenformaten arbeitenden Sende-/oder Empfangseinrichtungen über eine Vermittlungsanlage bekannt (US-A-4 323 728). Die Übertragung von Datensignalen folgt hierbei über eine Datenvermittlungsanlage, die für die Abwicklung unterschiedlicher Datenübertragungsprozeduren und für die Übertragung unterschiedlicher Datenformate ausgelegt ist. Hierzu sind in der Datenvermittlungsanlage für die jeweiligen Datenübertragungsprozeduren und das jeweilige Datenformat gesonderte Gruppen von Anschlussschaltungen vorgesehen. Mit diesen Gruppen von Anschlussschaltungen ist nun eine Umsetzeinrichtung verbunden, welche die von einer Anschlussschaltung abgegebenen digitalen Signale vollständig aufnimmt, zwischenspeichert und hinsichtlich der Datenübertragungsprozedur und des Datenformates umsetzt und dann an die jeweils in Frage kommende Anschlussschaltung aussendet. Diese bekannte Schaltungsanordnung dient insbesondere zur Übertragung von digitalen Signalen zwischen Telex- und Teletex-Endgeräten.

Bei der Übertragung von Datensignalen über diese Umsetzeinrichtung besteht keine feste Verbindung zwischen den genannten Endgeräten, sondern es sind nach der Zwischenspeicherung und Umsetzung der zu übertragenden digitalen Signale in der Umsetzeinrichtung mehrere Kommunikationen mit den Endgeräten erforderlich. Damit ist aber ein zuweilen nicht erwünschter Steuerungsaufwand in der Umsetzeinrichtung und in der angeschlossenen Datenvermittlungsanlage verbunden. Darüber hinaus ist es mit der Umsetzeinrichtung dieser bekannten Schaltungsanordnung nicht möglich, Nachrichtensignale zwischen Endgeräten, die an Vermittlungsstellen eines Durchschaltevermittlungsnetzes oder eines die Übertragung der Nachrichtensignale in Form von Paketen ermöglichenden Vermittlungsnetzes angeschlossen sind, und an Vermittlungsstellen eines die Übertragung der Nachrichtensignale in Form von Paketen ermöglichenden Vermittlungsnetzes angeschlossenen Endgeräten zu übertragen, da der Betrieb einer solchen Umsetzeinrichtung voraussetzen würde, dass diese Umsetzeinrichtungen mit entsprechenden Paketierungs- und Depaktierungseinrichtungen ausgerüstet wären, was tatsächlich jedoch nicht der Fall ist.

Es ist ferner ein Teletex-Telex-Umsetzer bekannt, (Zeitschrift «Philips Telecommunication Review», Band 39, Nr. 2, Juni 1981, Seiten 49 bis 62). Hierbei handelt es sich um eine Umsetzeinrichtung, die einen Netzübergang von einem Durchschaltevermittlungsnetz in ein Paketvermittlungsnetz ermöglicht. Es ist aber auch hier bei der Übertragung von digitalen Signalen zwischen einem Telex- und einem Teletex-Endgerät vorgesehen, mehrere Kommunikationen (mehrere Verbindungsaufbauvorgänge) zwischen den Endgeräten und der Umsetzeinrichtung durchzuführen. Damit ergibt sich auch hier der Nachteil, dass innerhalb der Umsetzeinrichtung bzw. innerhalb der Vermittlungsstellen erhebliche Steuerungsvorgänge für die Übertragung der digitalen Signale erforderlich sind.

Es ist nun Aufgabe der vorliegenden Erfindung, einen Weg zu zeigen, wie eine Schaltungsanordnung der eingangs genannten Art ausgebildet werden kann, um digitale Signale zwischen mit unterschiedlichen Übertragungsprozeduren arbeitenden Vermittlungsstellen eines ersten Vermittlungsnetzes und eines die Übertragung von Nachrichtensignalen in Form von Paketen ermöglichenden zweiten Vermittlungsnetzes zu übertragen.

Gelöst wird diese Aufgabe gemäss der vorliegenden Erfindung dadurch, dass die Umsetzeinrichtung über zumindest einen ersten Leitungsanschlussmodul an Übertragungsleitungen einer Vermittlungsstelle des ersten Vermittlungsnetzes und über mindestens einen gesonderten zweiten Leitungsanschlussmodul an mindestens eine Übertragungsleitung einer Vermittlungsstelle des zweiten Vermittlungsnetzes angeschlossen ist, dass auf der jeweiligen zu dem zweiten Vermittlungsnetz gehörende Übertragungsleitung für eine Übertragung von Paketen eine vorgegebene Anzahl von virtuellen Kanälen zur Verfügung steht, welchen jeweils eine der mit der Umsetzeinrichtung verbundenen, zu dem ersten Vermittlungsnetz gehörenden Übertragungsleitungen fest zugeordnet ist und dass die ersten und zweiten Leitungsanschlussmoduln derart ausgebildet und miteinander verbunden sind, dass sie bei einer Übertragung von Nachrichtensignalen über eine mit ihnen verbundene Übertragungsleitung lediglich die in dem jeweiligen Vermittlungsnetz vorgesehenen netzabhängigen Prozedurteile abwickeln und die zusammen mit den die Abwicklung netzabhängiger Prozedurteile ermöglichenden Signalteile entsprechend den netzunabhängigen Prozedurteilen auftretenden Datensignale in unveränderter Form an denjenigen Leitungsanschlussmodul abgeben, welcher mit der für die Weiterleitung der Nachrichtensignale in Frage kommenden Übertragungsleitung des jeweils anderen Vermittlungsnetzes verbunden ist, und dass der betreffende Leitungsanschlussmodul dann diese Datensignale mit den von ihm bereitgestellten Signalteilen, die die Abwicklung der in dem in Frage kommenden Vermittlungsnetz vorgesehenen netzabhängigen Prozedurteile ermöglichen, zusammenfasst.

Der modulare Aufbau der Umsetzeinrichtung bringt den Vorteil mit sich, dass jeder der in der Umsetzeinrichtung vorgesehenen Leitungsanschlussmoduln lediglich eine der in den miteinander verbundenen Vermittlungsnetzen vorgesehenen Übertragungsprozeduren abzuwickeln braucht. Damit ist für den Betrieb der Umsetzeinrichtung lediglich ein relativ geringer Steuerungsaufwand erforderlich. Andererseits ist aber auch eine derartige Umsetzeinrichtung aufgrund ihres modularen Aufbaus durch einen einfachen Austausch von Leitungsanschlussmoduln an beliebige Übertragungsprozeduren anpassbar.

Ein weiterer Vorteil der Schaltungsanordnung gemäss der vorliegenden Erfindung liegt in der festen Zuordnung zwischen den für eine Übertragung von Nachrichtensignalen auf den Übertragungsleitungen des zweiten Vermittlungsnetzes vorgesehenen virtuellen Kanälen und den Übertragungsleitungen des ersten Vermittlungsnetzes. Üblicherweise wird in Paketvermittlungsanlagen erst im Zuge eines Verbindungsaufbaus der für die Nachrichtensignalübertragung zu benutzende virtuelle Kanal festgelegt. Damit ist aber ein beträchtlicher Steuerungsaufwand verbunden. Durch die genannte feste Zuordnung sind dagegen keine über die Umsetzfunktion hinausgehende Steuerungsmassnahmen innerhalb der Umsetzeinrichtung erforderlich.

Zweckmässige Ausgestaltungen der Schaltungsanordnung gemäss der Erfindung ergeben sich aus den Unteransprüchen.

Anhand von Zeichnungen wird die Erfindung nachstehend beispielsweise näher erläutert.

Figur 1 zeigt ein Blockschaltbild einer Schaltungsanordnung gemäss der Erfindung.

Figur 2 zeigt in einem Blockschaltbild den näheren Aufbau eines Leitungsanschlussmoduls für den Anschluss an eine nach einem synchronen Verfahren arbeitende Durchschaltevermittlungsstelle.

Figur 3 zeigt in einem Blockschaltbild den näheren Aufbau eines Leitungsanschlussmoduls für den Anschluss an eine nach einem asynchronen Verfahren arbeitende Durchschaltevermittlungsstelle.

Figur 4 zeigt in einem Blockschaltbild den näheren Aufbau eines Leitungsanschlussmoduls für den Anschluss an eine die Übertragung der Nachrichtensignale in Form von Paketen ermöglichende Vermittlungsstelle.

Figur 5 zeigt in einem Blockschaltbild den näheren Aufbau eines Steuermoduls.

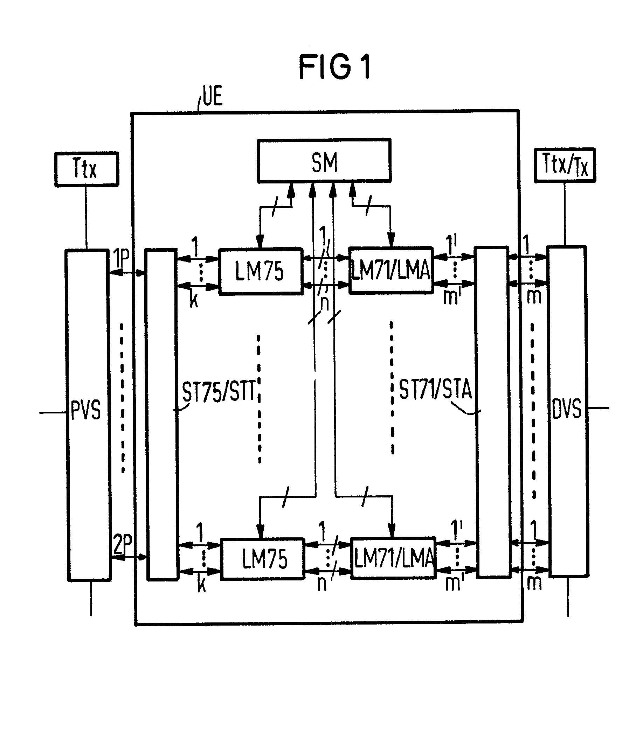

Gemäss Fig. 1 ist eine dezentrale Umsetzeinrichtung UE über Übertragungsleitungen 1 bis m mit einer Durchschaltevermittlungsstelle DVS eines Durchschaltevermittlungsnetzes und über Übertragungsleitungen 1P und 2P mit einer Vermittlungsstelle eines die Übertragung der Nachrichtensignale in Form von Paketen ermöglichenden Vermittlungsnetzes PVS verbunden. Bei dem zuletzt genannten Vermittlungsnetz kann es sich entweder um ein Fernsprechnetz oder um ein Paketvermittlungsnetz handeln. Die beiden genannten Vermittlungsstellen mögen z.B. Endvermittlungsstellen darstellen, an die Telex- und Teletex-Endgeräte anschliessbar sind (in Fig. 1 bezeichnet mit Tx und Ttx). Unter Endgeräte sollen hierbei die eigentlichen Endgeräte und die damit verbundenen Datenübertragungseinrichtungen verstanden werden. Die Vermittlungsstellen können aber auch beliebige Zwischenvermittlungsstellen der Vermittlungsnetze darstellen. Die Telex-Endgeräte mögen beispielsweise ihre Signale als Start-Stop-Zeichen gemäss dem internationalen Telegrafenalphabet ITA No. 2 mit 50 bit/s abgeben. Die Teletex-Endgeräte mögen beispielsweise die Signale als synchrone Signale gemäss dem internationalen Alphabet IA No. 5 mit einer Datenübertragungsrate von 2400 bit/s übertragen.

Zu der Durchschaltevermittlungsstelle DVS hin ist die Umsetzeinrichtung UE durch eine Schnittstellenschaltung ST71/STA mit den Übertragungsleitungen 1 bis m verbunden. Durch den Schrägstrich soll hierbei angedeutet werden, dass abhängig vom verwendeten Übertragungsverfahren eine der beiden Schnittstellenschaltungen verwendet wird. Eine Schnittstellenschaltung ST71 ist dann zu verwenden, wenn es sich bei der Durchschaltevermittlungsstelle um eine nach einem synchronen Verfahren arbeitende Vermittlungsstelle handelt, auf deren Übertragungsleitungen eine Signalisierungsprozedur nach X.71 gemäss CCITT angewandt ist. In entsprechender Weise ist eine Schnittstellenschaltung STA dann zu verwenden, wenn es sich bei der Durchschaltevermittlungsstelle um eine nach einem asynchronen Verfahren arbeitende Vermittlungsstelle handelt, auf deren Übertragungsleitungen beispielsweise die A-Signalisierung gemäss CCITT angewandt ist. Innerhalb der Umsetzeinrichtung UE ist die jeweilige Schnittstellenschaltung durch Leitungen 1' bis m' mit Leitungsanschlussmoduln LM71/LMA verbunden. Der Schrägstrich soll hierbei wiederum angeben, dass ein an das jeweilige Übertragungsverfahren angepasster Leitungsanschlussmodul an die Schnittstellenschaltung angeschaltet ist.

Die Umsetzeinrichtung UE ist durch eine Schnittstellenschaltung ST75/STT mit den Übertragungsleitungen 1P, 2P einer die Übertragung der Nachrichtensignale in Form von Paketen ermöglichenden Vermittlungsstelle verbunden. Auf den genannten Übertragungsleitungen möge eine Übertragungsprozedur nach X.75 gemäss CCITT angewandt sein. Je nachdem, ob es sich bei der Vermittlungsstelle PVS um eine Paketvermittlungsstelle oder um eine Vermittlungsstelle eines Fernsprechnetzes handelt, ist eine Schnittstellenschaltung ST75 oder STT vorgesehen. An die Schnittstellenschaltung ST75/STT sind ausserdem Leitungsanschlussmoduln LM75 angeschlossen. Die Anzahl der Übertragungsleitungen 1P, 2P entspricht der Gesamtanzahl der von den Leitungsanschlussmoduln LM75 her an die Schnittstellenschaltung ST75/STT herangeführten Leitungen. Die Leitungsanschlussmoduln LM75 und LM71/LMA sind durch Leitungen 1 bis n miteinander verbunden. Die genannten Leitungsanschlussmoduln sind über bidirektional betreibbare Steuerleitungen mit dem Steuermodul SM verbunden. Der Schrägstrich auf den Leitungen (Fig. 1) soll angeben, dass es sich dabei jeweils um mehrere Einzelleitungen handelt. Derartige Schrägstriche sind auch bei anderen, in den Figuren dargestellten Leitungen vorgesehen, um das Vorliegen von mehreren Einzelleitungen anzudeuten.

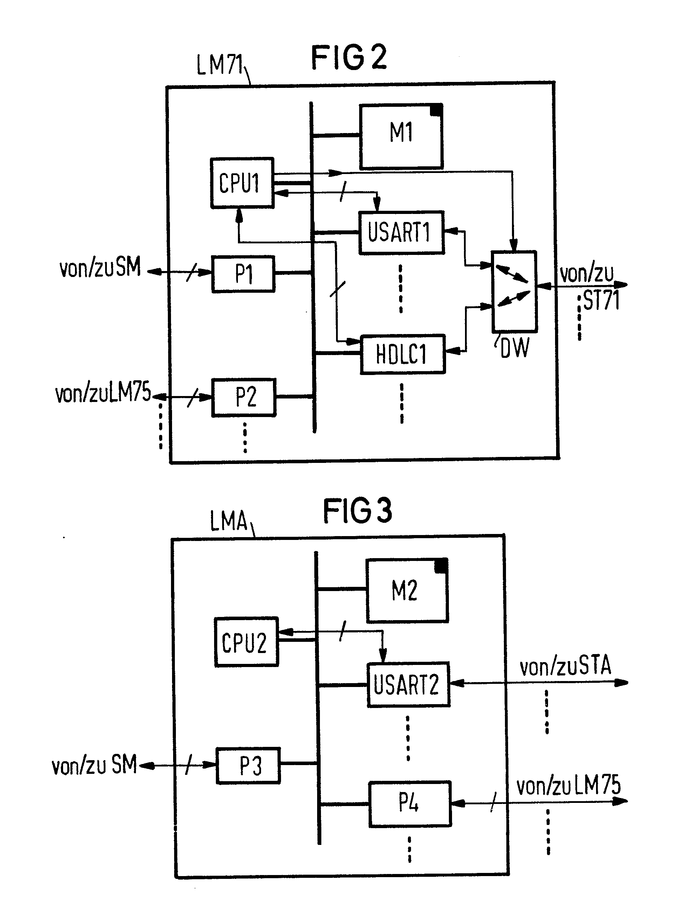

In Fig. 2 ist in einem Blockschaltbild ein möglicher Aufbau der in Fig. 1 angedeuteten Leitungsanschlussmoduln LM71 gezeigt. Wie bereits angedeutet, werden solche Leitungsanschlussmoduln dann eingesetzt, wenn die Umsetzeinrichtung UE an eine nach einem synchronen Verfahren arbeitende Durchschaltevermittlungsstelle angeschlossen ist. Der in Fig. 2 mit LM71 bezeichnete Leitungsanschlussmodul enthält einen Prozessor CPU1, der über eine Busleitungsanordnung mit einer Speicheranordnung M1, mit Schnittstellenschaltungen P1, P2 und mit Sende-/Empfangsschaltungen USART1, HDLC1 verbunden ist. Die genannten Sende-/Empfangsschaltungen sind von dem Prozessor CPU1 her steuerbar. Die in dem Blockschaltbild dargestellten Sende-/Empfangsschaltungen und die Schnittstellenschaltung P2 können abhängig von der Anzahl der an die Umsetzeinrichtung angeschlossenen Übertragungsleitungen mehrfach vorhanden sein.

Die Sende-/Empfangsschaltung USART1, im weiteren als Signalisierungsumsetzschaltung bezeichnet, dient für die Aufnahme und Umsetzung von ihr eingangsseitig jeweils zugeführten Signalisierungsinformationen. Die Sende-/Empfangsschaltung HDLC1, im weiteren als Datenübertragungsschaltung bezeichnet, ist lediglich bei der Datensignalübertragung wirksam. Die Speicheranordnung M1 enthält Festwertspeicher und Speicher mit wahlfreiem Zugriff. Die Schnittstellenschaltungen P1, P2 sind über Leitungen mit dem Steuermodul SM bzw. mit einem Leitungsanschlussmodul LM75 gemäss Fig. 1 verbunden. Jeweils eine Signalisierungsumsetzschaltung und eine Datenübertragungsschaltung sind an eine Datenweiche DW angeschlossen, die von dem Prozessor CPU1 her steuerbar ist. Diese Datenweiche ist ausserdem mit der Schnittstellenschaltung ST71 gemäss Fig. 1 verbunden.

In Fig. 3 ist in einem Blockschaltbild ein möglicher Aufbau einer der in Fig. 1 angedeuteten Leitungsanschlussmoduln LMA gezeigt. Der in Fig. 3 mit LMA bezeichnete Leitungsanschlussmodul enthält einen Prozessor CPU2, der über eine Busleitungsanordnung mit einer Festwertspeicher und Speicher mit wahlfreiem Zugriff enthaltenden Speicheranordnung M2, mit Schnittstellenschaltungen P3, P4 und mit von dem Prozessor CPU2 her steuerbaren Sende-/Empfangsschaltungen USART2 verbunden ist. Die Sende-/Empfangsschaltungen USART2, die wie die Schnittstellenschaltung P4 abhängig von der Anzahl der an einen Leitungsanschlussmodul LMA angeschlossenen Übertragungsleitungen mehrfach vorhanden sind, dienen hauptsächlich der Serien-Parallel-Umsetzung bzw. der Parallel-Serien-Umsetzung von ihnen eingangsseitig jeweils zugeführten Signalen. Verbunden sind die Sende-/Empfangsschaltungen mit der Schnittstellenschaltung STA gemäss Fig. 1. An die Schnittstellenschaltungen P3, P4 sind der Steuermodul SM bzw. ein Leitungsanschlussmodul LM75 gemäss Fig. 1 angeschlossen.

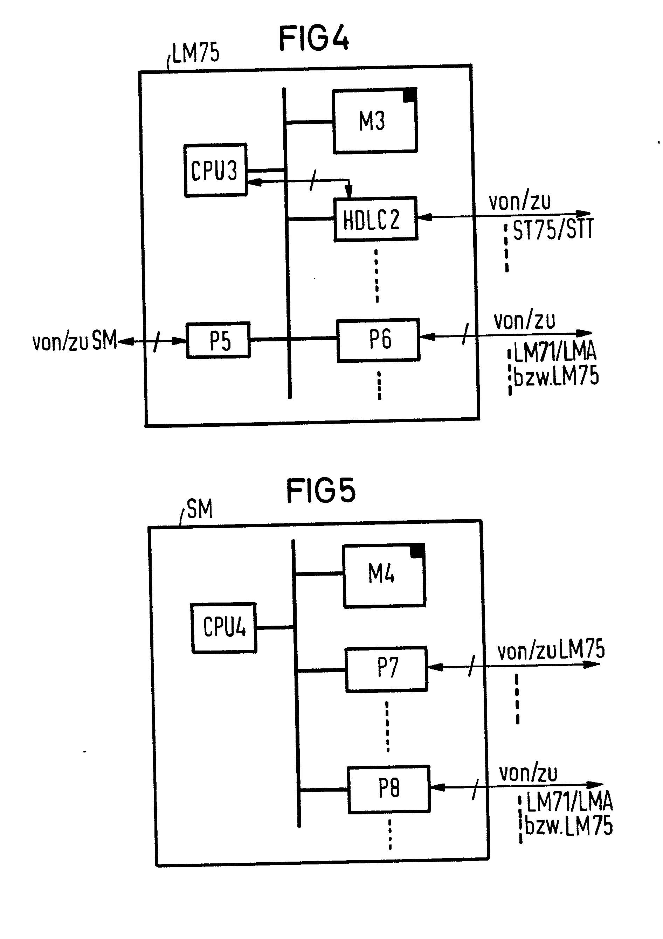

In Fig. 4 ist in einem Blockschaltbild ein möglicher Aufbau einer der in Fig. 1 angedeuteten Leitungsanschlussmoduln LM75 gezeigt. Der mit LM75 bezeichnete Leitungsanschlussmodul enthält wiederum einen Prozessor CPU3, der über eine Busleitungsanordnung mit einer Festwertspeicher und Speicher mit wahlfreiem Zugriff enthaltenden Speicheranordnung M3, mit Schnittstellenschaltungen P5, P6 und mit einer von dem Prozessor CPU3 her steuerbaren Sende-/Empfangsschaltung HDLC2 (Datenübertragungsschaltung) verbunden ist. Bei der Sende-/Empfangsschaltung HDLC2 handelt es sich um eine Datenübertragungsschaltung, in der sämtliche von oder zu den Übertragungsleitungen der Paketvermittlungsstelle PVS oder der Vermittlungsstelle des Fernsprechnetzes zu übertragenden Signale umgesetzt werden. Die genannten Schnittstellenschaltungen P5, P6 sind mit dem Steuermodul SM bzw. mit einem Leitungsanschlussmodul LM71 gemäss Fig. 1 verbunden. Die Scnittstellenschaltung P6 und die Sende-/Empfangsschaltung HDLC2 sind abhängig von der Anzahl der an den betreffenden Leitungsanschlussmodul herangeführten Leitungen mehrfach vorhanden.

In Fig. 5 ist schliesslich in einem Blockschaltbild ein möglicher Aufbau des in Fig. 1 angedeuteten Steuermoduls SM gezeigt. Dieser mit SM bezeichnete Steuermodul enthält gemäss Fig. 5 wiederum einen Prozessor CPU4, der mit einer Festwertspeicher und Speicher mit wahlfreiem Zugriff enthaltenden Speicheranordnung M4 und mit Schnittstellenschaltungen P7, P8 verbunden ist, an die ausserdem die Leitungsanschlussmoduln LM75 und LM71/LMA angeschlossen sind. Diese genannten Schnittstellenschaltungen können innerhalb des Steuermoduls mehrfach vorhanden sein. Die Anzahl der Schnittstellenschaltungen hängt dabei von der Anzahl der Leitungsanschlussmoduln ab.

Nachdem zuvor der Aufbau der in den Figuren dargestellten Schaltungsanordnungen erläutert worden ist, wird nunmehr die Arbeitsweise dieser Schaltungsanordnungen betrachtet. Es wird hierzu zunächst auf das allgemeine Übertragungsprinzip eingegangen. Zur Steuerung des Datentransportes zwischen Endgeräten durch sogenannte end-to-end-Protokolle einerseits und zwischen den jeweiligen Endgeräten und den in den Übertragungswegen liegenden Vermittlungsstellen andererseits sind für die Benutzer und für die Betreiber dieser Übertragungswege allgemein gültige Übertragungsprozeduren festgelegt. Für diese Übertragungsprozeduren ist ein Modell entworfen worden, das als ISO-Architekturmodell bekannt ist. Dieses Modell sieht für die Datenübertragung mehrere Schichten oder Ebenen vor, die sich hierarchisch übereinander aufbauen. Es wird dabei zwischen transportorientierten, netzabhängigen und verarbeitungsorientierten, netzunabhängigen Ebenen unterschieden. Die transportorientierten Ebenen umfassen die bitweise Übertragung auf den physikalischen Leitungen, eine Datensicherung auf den Übertragungswegen und den bei einem Verbindungsaufbau und bei einer bestehenden Verbindung durchzuführenden Datenaustausch innerhalb des jeweiligen Vermittlungsnetzes. Die höheren, netzunabhängigen Ebenen regeln den Datenaustausch zwischen den Endgeräten. Innerhalb der einzelnen Ebenen sind bestimmte Prozedurteile, auch als Protokolle bezeichnet, vorgesehen.

Die genannten netzabhängigen Ebenen und die darin zu realisierenden Prozedurteile sind z. B. für den Datenaustausch zwischen Teletex-Endgeräten über Paketvermittlungsstellen oder Fernsprechvermittlungsstellen durch die CCITT Empfehlungen S.70 und X.75 festgelegt. Bei der Datenübertragung innerhalb eines Paketvermittlungsnetzes oder eines Fernsprechvermittlungsnetzes ist danach unter anderem sowohl beim Verbindungsaufbau als auch bei der Datenübertragung bei einer bestehenden Verbindung eine Übertragung mit einer blockweisen Datensicherung vorgesehen (HDLC-Prozedur). Innerhalb dieser durch die Datensicherung vorgegebenen Blöcke werden in einem solchen Vermittlungsnetz die eigentlichen zu übertragenden Pakete transportiert. Beim Verbindungsaufbau wird dabei zunächst durch besonders gekennzeichnete Pakete eine virtuelle Verbindung über die in den Übertragungswegen liegenden Vermittlungsstellen hergestellt. Für eine virtuelle Verbindung stehen nach dem Verbindungsaufbau auf den Übertragungsleitungen virtuelle Kanäle zur Verfügung.

In einem nach einem synchronen Verfahren arbeitenden Durchschaltevermittlungsnetz ist eine synchrone envelopeweise Übertragung vorgesehen. Beim Verbindungsaufbau ist die zwischen Vermittlungsstellen abzuwickelnde Zwischenamtsignalisierung durch die CCITT-Empfehlung X.71 geregelt. Hierbei erfolgt die Sicherung der zu übertragenden Signalisierungsinformationen durch in den Signalisierungsinformationen enthaltene Paritätsbits und durch die zeitliche Überwachung des Verbindungsaufbaus in den Vermittlungsstellen. Eine darüber hinausgehende Datensicherung ist beim Verbindungsaufbau nicht vorgesehen. Handelt es sich bei den an einer Verbindung beteiligten Endgeräten um Teletex-Endgeräte, so erfolgt auch hier bei einer bestehenden Verbindung eine durch die HDLC-Prozedur gesicherte Datenübertragung. Innerhalb der durch die HDLC-Prozedur vorgegebenen Blöcke werden die eigentlichen, zwischen den Endgeräten auszutauschenden Datensignale übertragen, die, wie bereits oben erwähnt, wiederum höhere, die Abwicklung netzunabhängiger Prozedurteile bewirkende Signalteile enthalten können.

In einem nach einem asynchronen Verfahren arbeitenden Durchschaltevermittlungsnetz erfolgt die Übertragung von Datensignalen und Signalisierungsinformationen in Form von Start-Stop-Zeichen. Handelt es sich bei diesem Durchschaltevermittlungsnetz um ein Telex-Netz, so kann ein Verbindungsaufbau zwischen zwei Vermittlungsstellen nach der A-Signalisierung gemäss CCITT-Empfehlung U.1 erfolgen. Die Sicherung der zwischen den beiden Vermittlungsstellen zu übertragenden Signalisierungsinformationen ist durch die zeitlichen Reihenfolge der zu übertragenden Signalisierungsinformationen vorgegeben. Zur Datenübertragung bei einer bestehenden Verbindung findet die Telex-Übertragungsprozedur Anwendung.

Nachdem zuvor in einem kurzen Überblick die in verschiedenen Vermittlungsnetzen zu realisierenden Übertragungsprozeduren gegenübergestellt worden sind, wird nunmehr näher auf die Arbeitsweise der Umsetzeinrichtung UE eingegangen. Hierzu wird Bezug genommen auf die Fig. 1 in Verbindung mit den Fig. 2 bis 5. In einem ersten Ausführungsbeispiel soll die Umsetzeinrichtung UE zum Übertragen von durch Datensignale und/oder Signalisierungsinformationen gebildeten Nachrichtensignalen zwischen Teletex-Endgeräten dienen, die über Vermittlungsstellen eines Durchschaltevermittlungsnetzes und eines Paketvermittlungsnetzes verbunden sind. Bei diesem Ausführungsbeispiel enthält die Umsetzeinrichtung UE zu der Durchschaltevermittlungsstelle DVS hin eine Schnittstellenschaltung ST71 und Leitungsanschlussmoduln LM71. Von der durchschaltevermittlungsstelle her sind jeweils vier für eine Datenübertragungsrate von 2400 bit/s ausgelegte Übertragungsleitungen über die Schnittstellenschaltung an einen Leitungsanschlussmodul LM71 herangeführt (m = 4 in Fig. 1). Die einzelnen Leitungsanschlussmoduln LM71 sind jeweils durch vier Leitungen mit jeweils einem Leitungsanschlussmodul LM75 verbunden (n = 4 in Fig. 1). Jeder Leitungsanschlussmodul LM75 ist wiederum über eine schnittstellenschaltung ST75 mit einer für eine Datenübertragungsrate von 9,6 kbit/s ausgelegten Übertragungsleitung der Paketvermittlungsstelle PVS verbunden (k = 1 in Fig. 1). Innerhalb der Leitungsanschlussmoduln LM75 sind den Verbindungsleitungen, die die Leitungsanschlussmoduln LM75 und LM71 verbinden, auf der in Frage kommenden Übertragungsleitung des Paketvermittlungsnetzes zu benutzende virtuelle Kanäle fest zugeordnet, d.h. auf den Übertragungsleitungen 1P, 2P stehen jeweils vier virtuelle Kanäle zur Verfügung.

Es wird nun zunächst der Fall betrachtet, dass von einem an der Durchschaltevermittlungsstelle DVS angeschlossenen Teletex-Endgerät Ttx eine Verbindung zu einem an der Paketvermittlungsstelle PVS angeschlossenen Teletex-Endgerät Ttx aufgebaut wird. Die hierzu in der Durchschaltevermittlungsstelle DVS umgesetzten Signalisierungsinformationen werden entsprechend der Signalisierungsprozedur X.71 an die Umsetzeinrichtung UE weitergeleitet. In der Schnittstellenschaltung ST71 erfolgt zunächst eine Pegelumsetzung und eine Überprüfung des Envelope-Synchronismus an Hand der zugeführten Signalisierungsinformation. Anschliessend werden für die Überwachung des Envelope-Synchronismus dienende, in den Signalisierungsinformationen enthaltene Überwachungs- bzw. Synchronisierbits entfernt, und die verbleibenden Bits werden dem in Frage kommenden Leitungsanschlussmodul LM71 übergeben. Der betreffende Leitungsanschlussmodul LM71 befindet sich für die betreffenden Signalisierungsinformationsbits führenden, bisher noch nicht belegten Übertragungsleitungen in einem definierten Ausgangszustand, d.h. die betreffende Signalisierungsumsetzschaltung USART1 gemäss Fig. 2 ist durch den zugehörigen Prozessor CPU1 wirksam geschaltet. Ausserdem ist die Datenweiche DW durch den Prozessor CPU1 so gesteuert, dass sämtliche aufgenommenen Signalisierungsinformationen zu dieser Signalisierungsumsetzschaltung USART1 hin gelangen können.

Die auf diese Weise in serieller Form empfangenen Signalisierungsinforationen werden in der Signalisierungsumsetzschaltung USART1 in parallele Zeichen umgesetzt und dem Prozessor CPU1 über die Busleitungsanordnung zugeführt. Das Vorhandensein solcher paralleler Zeichen wird dabei dem Prozessor CPU1 durch ein entsprechendes Steuersignal auf der in Fig. 2 dargestellten Steuerleitung angezeigt. Der Prozessor CPU1 führt daraufhin eine Bewertung der über die Busleitungsanordnung empfangenen parallelen Zeichen durch, übergibt der Signalisierungsumsetzschaltung USART1 gegebenenfalls in Rückwärtsrichtung zu dem an der Durchschaltevermittlungsstelle DVS angeschlossenen Teletex-Endgerät Ttx hin zu übertragende Signalisierungsinformationen, die von der Signalisierungsumsetzeinrichtung USART1 nach einer Umsetzung in eine serielle Form zur Weiterleitung an die Schnittstellenschaltung ST71 übergeben werden, und leitet aufgrund der Bewertung der empfangenen parallelen Zeichen diesen Zeichen entsprechende Meldungen ab, die über die Schnittstellenschaltung P1 dem Steuermodul SM zugeführt werden. Die bei einem Verbindungsaufbau in den Signalisierungsinformationen enthaltenen Wahlteilinformationen werden zunächst bis zum vollständigen Empfang der Wahlinformationen durch den Prozessor CPU1 in einem Speicher mit wahlfreiem Zugriff der Speicheranordnung M1 zwischengespeichert. Bei Vorliegen der vollständigen Wahlinformationen werden diese mit einer dafür vorgesehenen Meldung an den Steuermodul SM übergeben.

Die auf diese Weise von dem Leitungsanschlussmodul LM71 übergebenen Meldungen werden dem Prozessor CPU4 des Steuermoduls SM gemäss Fig. 5 über die Schnittstellenschaltung P8 und über die zugehörige Busleitungsanordnung zugeführt. Der Prozessor CPU4 leitet aus den auf diese Weise empfangenen Meldungen entsprechende Aufträge ab und gibt diese über die Schnittstellenschaltung P7 an den mit dem betrachteten Leitungsanschlussmodul LM71 verbundenen Leitungsanschlussmodul LM75 weiter. Die von dem Leitungsanschlussmodul LM71 her empfangenen Wahlinformationen werden dabei zunächst in einem Speicher mit wahlfreiem Zugriff der Speicheranordnung M4 zwischengespeichert und mit einem gesonderten Auftrag dem betreffenden Leitungsanschlussmodul LM75 übergeben.

Die Schnittstellenschaltung P5 des Leitungsanschlussmoduls LM75 gemäss Fig. 4 übernimmt die einzelnen beim Verbindungsaufbau auftretenden Aufträge und führt diese dem zugehörigen Prozessor CPU3 über die Busleitungsanordnung zu. Der Prozessor CPU3 wiederum leitet aus diesen Aufträgen entsprechende an das Paketvermittlungsnetz angepasste Signalisierungsinformationen ab. Die einzelnen Signalisierungsinformationen, die hier in Form von Paketen zu übertragen sind, sind in der Speicheranordnung M3 hinterlegt. Der Prozessor CPU3 ermittelt schliesslich den für die Übertragung auf der Übertragungsleitung 1P bzw. 2P zu benutzenden virtuellen Kanal und leitet den Aufträgen entsprechende Signalisierungsinformationen über die Busleitungsanordnung an die Sende-/Empfangsschaltung HDLC2 weiter. Den die Signalisierungsinformationen enthaltenden Paketen werden durch den Prozessor CPU3 dabei noch für die Abwicklung der Datensicherungsprozedur (HDLC-Prozedur) dienende Signalteile angefügt.

In der gerade betrachteten Sende-/Empfangsschaltung HDLC2 werden den einzelnen Signalisierungsinformationen zusätzliche für die Datensicherung dienende Signalteile angefügt. Die auf diese Weise entsprechend der im Paketvermittlungsnetz massgebenden (netzabhängigen) Signalisierungsprozedur aufbereiteten Signalisierungsinformationen werden von der Sende-/Empfangsschaltung HDLC2 aus in serieller Form an die Schnittstellenschaltung ST75 weitergeleitet. Diese Schnittstellenschaltung ST75 überträgt schliesslich diese serielle Bitfolge über die in Frage kommende Übertragungsleitung des Paketvermittlungsnetzes. Im übrigen enthält jede in einem solchen Paket übertragene Signalisierungsinformation den jeweils zu benutzenden virtuellen Kanal kennzeichnende Informationen. Die gegebenenfalls bei diesem Verbindungsaufbau in der oben erwähnten Rückwärtsrichtung zu übertragenden, von der Paketvermittlungsstelle PVS her kommenden Signalisierungsinformationen werden in entsprechender Weise durch die Leitungsanschlussmoduln LM75 bzw. LM71 unter der Steuerung durch den Steuermodul SM umgesetzt. Bei einem Verbindungsaufbau, der von einem Teletex-Endgerät des Paketvermittlungsnetzes veranlasst wird, erfolgt die netzabhängige Umsetzung in entsprechender Weise wie zuvor erläutert. Der dabei für die Signalübertragung zu der Umsetzeinrichtung UE hin zu benutzende virtuelle Kanal ist durch die Paketvermittlungsstelle festzulegen.

Nach Abwicklung der gesamten Signalisierungsprozedur wird den beiden an einer Verbindung beteiligten Leitungsanschlussmoduln (LM75, LM71) von dem Steuermodul SM der Datenübertragungszustand durch entsprechende Aufträge angezeigt. In dem Leitungsanschlussmodul LM71 werden daraufhin die Signalisierungsumsetzschaltung USART1 unwirksam und die Datenübertragungsschaltung HDLC1 wirksam gesteuert (Fig. 2). Ausserdem wird die Datenweiche DW umgeschaltet. Wie bereits oben erwähnt, ist für Teletex-Endgeräte, die an Durchschaltevermittlungsstellen angeschlossen sind, eine blockweise gesicherte Datenübertragung erst bei einer bestehenden Verbindung vorgesehen. Die von der Durchschaltevermittlungsstelle DVS her in serieller Form über Übertragungsleitungen übertragenen Datenblöcke, die nunmehr die Datensignale enthalten, werden wieder von der in der Umsetzeinrichtung UE gemäss Fig. 1 enthaltenen Schnittstellenschaltung ST71 übernommen und für die weitere Bearbeitung in der bereits oben dargestellten Weise aufbereitet. Die aufbereiteten Datenblöcke werden anschliessend in der Datenübertragungsschaltung HDLC1 gemäss Fig. 2 übernommen. Hier erfolgt eine Überprüfung der der Datensicherung dienenden Signalteile und eine Umsetzung der zuvor seriell empfangenen Datenblöcke in parallele Zeichen. Die auf diese Weise bereitgestellten parallelen Zeichen werden anschliessend dem Prozessor CPU1 über die zugehörige Busleitungsanordnung zugeführt. Das Vorliegen eines solchen parallelen Zeichens meldet die Datenübertragungsschaltung HDLC1 dem Prozessor CPU1 durch ein entsprechendes Steuersignal auf der dafür vorgesehenen Steuerleitung.

Der Prozessor CPU1 (Fig. 2) übernimmt die ihm von der Datenübertragungsschaltung HDLC1 her zugeführten parallelen Zeichen und führt zunächst eine Bearbeitung der der Datensicherung dienenden, noch nicht von der zugehörigen Datenübertragungsschaltung HDLC1 bewerteten Signalteile durch. Anschliessend hinterlegt er die in einem Datenblock (HDLC-Block) enthaltenen Datensignale zur Zwischenspeicherung in einem dafür vorgesehenen Speicherbereich der Speicheranordnung M1. Dabei werden beispielsweise jeweils 128 Bytes zwischengespeichert. Lediglich diese netzunabhängigen, zwischengespeicherten Datensignale werden anschliessend über die in Frage kommende Schnittstellenschaltung P2 an den zugehörigen Leitungsanschlussmodul LM75 weitergeleitet.

Der zuletzt genannte Leitungsanschlussmodul LM75 (Fig. 4) übernimmt nun die ihm blockweise übergebenen Datensignale über die in Frage kommende Schnittstellenschaltung P6, die ihrerseits die Datensignale über die zugehörige Busleitungsanordnung zum Prozessor CPU3 überträgt. Der Prozessor CPU3 ermittelt daraufhin den für die Übertragung zur Vermittlungsstelle PVS hin auf der zugehörigen Übertragungsleitung 1P bzw. 2P zu benutzenden virtuellen Kanal und fügt die ihm von dem Leitungsanschlussmodul LM71 zugeführten Datensignale in ein entsprechendes Paket ein. Einem solchen Paket werden zusätzlich noch der Datensicherung dienende Signalteile angefügt. Die sich daraus ergebenden Datenblöcke werden anschliessend in der bereits beim Verbindungsaufbau dargestellten Weise an die zugehörige Sende-/Empfangsschaltung HDLC2 weitergeleitet.

Entsprechende Umsetzvorgänge laufen auch dann ab, wenn Datensignale von an der Paketvermittlungsstelle PVS angeschlossenen Teletex-Endgeräten Ttx her zu an der Durchschaltevermittlungsstelle DVS angeschlossenen Teletex-Endgeräten Ttx zu übertragen sind. Hierbei werden auch lediglich die in einem Paket enthaltenen Datensignale zwischen den Leitungsanschlussmoduln LM75 und LM71 übertragen. Diesen Datensignalen werden dann wieder zur Abwicklung der Datensicherungs-Prozedur (HDLC-Prozedur) durch den Prozessor CPU1 (Fig. 2) und durch die in Frage kommende Datenübertragungsschaltung HDLC1 gesonderte Signalteile angefügt. Hieran schliesst sich in der Datenübertragungsschaltung HDLC1 eine Parallel-Serien-Umsetzung an. In der der Datenübertragungsschaltung HDLC1 nachgeschalteten Schnittstellenschaltung ST71 (Fig. 1) werden schliesslich in die nunmehr vorliegende serielle Bitfolge vor deren Weiterleitung noch der Überwachung des Envelope-Synchronismus dienende Überwachungsbits in periodischen Abständen eingefügt.

Ein zweites Ausführungsbeispiel der Umsetzeinrichtung UE gemäss Fig. 1 betrifft deren Anschluss an einer Paketvermittlungsstelle einerseits und an einer nach einem asynchronen Verfahren arbeitenden Durchschaltevermittlungsstelle. Hierzu sind in der Umsetzeinrichtung UE die Leitungsanschlussmoduln LM71 durch Leitungsanschlussmoduln LMA (Fig. 3) und die Schnittstellenschaltung ST71 durch eine Schnittstellenschaltung STA ersetzt. Mit einer solchen Umsetzeinrichtung UE ist z.B. ein Nachrichtensignalaustausch zwischen an der betreffenden Durchschaltevermittlungsstelle DVS angeschlossenen Telex-Endgeräten und an der Paketvermittlungsstelle PVS angeschlossenen Teletex-Endgeräten möglich. Da, wie bereits eingangs erwähnt, bei einer Telex-Übertragung keine spezielle Datensicherung durchzuführen ist, enthält jeder Leitungsanschlussmodul LMA keine speziellen der Datenübertragung dienende Datenübertragungsschaltungen; er weist hier lediglich Sende-/Empfangsschaltungen USART2 auf. Diese Sende-/Empfangsschaltungen dienen sowohl beim Verbindungsaufbau/Verbindungsabbau als auch bei der Datenübertragung der Serien-Parallel-Umsetzung bzw. der Parallel-Serien-Umsetzung und der Überprüfung bzw. Einfügung der Start- und Stop-Bits. Die darüber hinausgehende Bearbeitung der über die Umsetzeinrichtung UE zu übertragenden Datensignale erfolgt ausschliesslich durch den Prozessor CPU2 gemäss Fig. 3.

Die Schnittstellenschaltung STA dient bei diesem Ausführungsbeispiel lediglich der Pegelumsetzung. Da die für eine Telex-Übertragung benutzten Übertragungsleitungen bei einer wesentlich geringeren Übertragungsgeschwindigkeit betrieben werden, sind an einen Leitungsanschlussmodul LMA z.B. bei einer Übertragungsgeschwindigkeit von 50 bit/s insgesamt 64 Übertragungsleitungen anschliessbar (m = 64 in Fig. 1). Ein Leitungsanschlussmodul LMA ist wie bei dem ersten Ausführungsbeispiel über vier Leitungen mit einem zugehörigen Leitungsanschlussmodul LM75 verbunden (n = 4 in Fig. 1). Der zuletzt genannte Leitungsanschlussmodul ist wiederum an eine für eine Übertragungsgeschwindigkeit von 9,6 kbit/s ausgelegte Übertragungsleitung der Paketvermittlungsstelle angeschlossen (k = 1 in Fig. 1). Die Umsetzvorgänge innerhalb der vorliegenden Umsetzeinrichtung UE entsprechen den Umsetzvorgängen innerhalb der Umsetzeinrichtung UE des ersten Ausführungsbeispiels, mit dem einzigen Unterschied, dass die Aufnahme und Abgabe von Datensignalen und Signalisierungsinformationen ausschliesslich über die Sende-/Empfangsschaltungen USART2 erfolgen.

Ein drittes Ausführungsbeispiel der Umsetzeinrichtung UE gestattet den Nachrichtensignalaustausch zwischen Teletex-Endgeräten, die an einer nach einem synchronen Verfahren arbeitenden Durchschaltevermittlungsstelle DVS angeschlossen sind, und Teletex-Endgeräten, die an einer Fernsprechvermittlungsstelle PVS angeschlossen sind. Die Übertragung der Nachrichtensignale von bzw. zu den Teletex-Endgeräten erfolgt dabei mit einer Datenübertragungsgeschwindigkeit von 2400 bit/s. Die Leitungsanschlussmoduln LM71 der Umsetzeinrichtung UE sind in diesem Fall über vier Leitungen mit der nach einem synchronen Verfahren arbeitenden Durchschaltevermittlungsstelle DVS verbunden (m = 4 in Fig. 1). Die Leitungsanschlussmoduln LM71 und die zugehörigen Leitungsanschlussmoduln LM75 sind über vier Leitungen miteinander verbunden (n = 4 in Fig. 1). Die zuletzt genannten Leitungsanschlussmoduln sind ausserdem über vier Leitungen (k = 4 in Fig. 1) an der Schnittstellenschaltung STT angeschlossen. Abweichend von dem ersten Ausführungsbeispiel steht für die Übertragung von Nachrichtensignalen über diese Leitungen lediglich jeweils ein virtueller Kanal zur Verfügung.

Die Übertragung der Nachrichtensignale erfolgt dabei mit einer Datenübertragungsgeschwindigkeit von 2400 bit/s. Die zuvor genannte Schnittstellenschaltung STT dient bei diesem Ausführungsbeispiel lediglich zur Pegelanpassung der Umsetzeinrichtung UE an die Fernsprechvermittlungsstelle PVS.

Bei der Übertragung von Nachrichtensignalen laufen in der vorliegenden Umsetzeinrichtung UE den Umsetzvorgängen innerhalb der Umsetzeinrichtung UE des ersten Ausführungsbeispiels entsprechende Umsetzvorgänge ab. Gegenüber dem ersten Ausführungsbeispiel der Umsetzeinrichtung UE treten lediglich Abweichungen bei der Anschaltung der vorliegenden Umsetzeinrichtung UE an die Fernsprechvermittlungsstelle PVS auf. Wie bereits erwähnt, steht hier für die Übertragung von Nachrichtensignalen von bzw. zu der Fernsprechvermittlungsstelle für jede fest mit der Fernsprechvermittlungsstelle verbundene Übertragungsleitung ein einziger virtueller Kanal zur Verfügung. Sowohl die Signalisierungsinformationen bei einem Verbindungsaufbau/Verbindungsabbau als auch die bei einer bestehenden Verbindung zu übertragenden Datensignale werden auf diesen Übertragungsleitungen in Form von Paketen gemäss der CCITT-Empfehlung X.75 übertragen.

Bei einem von der gerade betrachteten Durchschaltevermittlungsstelle ausgehenden Verbindungsaufbau werden die zunächst von der Umsetzeinrichtung UE her zu der Fernsprechvermittlungsstelle in Form von Paketen übertragenen Signalisierungsinformationen in dieser Fernsprechvermittlungsstelle in in Fernsprechvermittlungsnetzen übliche analoge Signale umgesetzt. Im anderen Fall, d.h. bei einem von der Fernsprechvermittlungsstelle ausgehenden Verbindungsaufbau, setzt die Fernsprechvermittlungsstelle die analogen Signalisierungsinformationen in digitale Signale um, die dann in Form von Paketen zu der zugehörigen Umsetzeinrichtung UE hin übertragbar sind. Zur Abwicklung der genannten Umsetzvorgänge mögen innerhalb der Fernsprechvermittlungsstelle entsprechende Umsetzeinrichtungen vorhanden sein. Bei einer bestehenden Verbindung werden die über die Fernsprechvermittlungsstelle zu übertragenden Nachrichtensignale ausschliesslich in Form von Paketen gemäss der CCITT-Empfehlung X.75 weitergeleitet, d.h. in diesem Fall erfolgt in der Fernsprechvermittlungsstelle keine zusätzliche Umsetzung der zu übertragenden Nachrichtensignale.

Schliesslich gestattet ein viertes Ausführungsbeispiel der Umsetzeinrichtung UE den Nachrichtensignalaustausch zwischen Teletex-Endgeräten, die an einer Fernsprechvermittlungsstelle angeschlossen sind, und Teletex-Endgeräten, die an einer Paketvermittlungsstelle angeschlossen sind. Hierzu sind in der Umsetzeinrichtung UE gemäss Fig. 1 die Leitungsanschlussmoduln LM71/LMA durch Leitungsanschlussmoduln LM75 und die Schnittstellenschaltung ST71/STA durch eine Schnittstellenschaltung STT ersetzt. Die Leitungsanschlussmoduln LM75 sind jeweils über vier Leitungen mit der Fernsprechvermittlungsstelle verbunden (m = 4 in Fig. 1). Auf diesen Leitungen steht für die Übertragung der Nachrichtensignale jeweils ein virtueller Kanal zur Verfügung. Die Übertragung der Nachrichtensignale erfolgt dabei mit einer Datenübertragungsgeschwindigkeit von 2400 bit/s.

Die genannten Leitungsanschlussmoduln LM75 sind ausserdem über jeweils vier Leitungen mit weiteren Leitungsanschlussmoduln LM75 verbunden (n = 4 in Fig. 1), die ihrerseits mit jeweils einer Leitung über die Schnittstellenschaltung ST75 an der Paketvermittlungsstelle angeschlossen sind (k = 1 in Fig. 1). Auf der zuletzt genannten Leitung stehen für die Übertragung der Nachrichtensignale vier virtuelle Kanäle zur Verfügung. Die Übertragung der Nachrichtensignale erfolgt dabei mit einer Datenübertragungsgeschwindigkeit von 9600 bit/s.

Die Umsetzvorgänge der vorliegenden Umsetzeinrichtung UE für die Übertragung von Nachrichtensignalen von bzw. zu der Paketvermittlungsstelle entsprechen den für das Paketvermittlungsnetz erforderlichen Umsetzvorgängen des ersten Ausführungsbeispiels. Die Umsetzvorgänge für die Übertragung von Nachrichtensignalen von bzw. zu der Fernsprechvermittlungsstelle entsprechen den für das Fernsprechvermittlungsnetz erforderlichen Umsetzvorgängen des dritten Ausführungsbeispiels.

Bezüglich des Steuermoduls SM sei hier noch angemerkt, dass dieser neben der Umsetzung der Signalisierungsinformationen auch Bedienungs- und Anzeigefunktionen (Fehlerprüfroutinen, Fehleranzeige, Besetztanzeige) ausführen kann.

Für die in den Leitungsanschlussmoduln LM71, LMA, LM75 und in dem Steuermodul SM enthaltenen Schaltungsteile können kommerziell erhältliche Bausteine verwendet werden. Als Prozessoren CPU1 bis CPU4 können Mikroprozessoren des Typs 8085A der Firma Intel verwendet werden. Die Sende-/Empfangsschaltungen USART1 und USART2 können durch Bausteine mit der Bezeichnung 8215A der Firma Intel gebildet sein. Für die Datenübertragungsschaltungen HDLC1 und HDLC2 können Bausteine mit der Bezeichnung 8273 der genannten Firma verwendet werden. Die Datenweiche DW kann eine herkömmliche Multiplexerschaltung sein, wie sie beispielsweise unter der Bezeichnung SN74151 bekannt ist. Die genannten Festwertspeicher und die Speicher mit wahlfreiem Zugriff der Speicheranordnungen M1 bis M4 können durch Bausteine mit der Bezeichnung 2732 bzw. 2185 der genannten Firma gebildet sein. Die Schnittstellenschaltungen P1 bis P8 können schliesslich durch Bausteine mit der Bezeichnung 8255 der Firma Intel gebildet sein.

Die Schnittstellenschaltung ST71 kann für das oben erwähnte Entfernen der der Envelope-Synchronisierung dienenden Synchronisierbits aus den ihr über die Übertragungsleitungen zugeführten Signalisierungsinformationen oder Datenblöcken bzw. zum Einfügen dieser Synchronisierbits in die an die Übertragungsleitungen abzugebenden Signalisierungsinformationen oder Datenblöcke beispielsweise Schieberegister enthalten. Dabei kann, wie bereits in der südafrikanischen Patentschrift Nr. 79/0700 beschrieben worden ist, so vorgegangen sein, dass diejenigen Registerstellen der Signale von den Übertragungsleitungen aufnehmenden Schieberegister für eine Bit-Weiterleitung unberücksichtigt bleiben, in denen die erwähnten Synchronisierbits enthalten sind. Bei den für eine Signalabgabe an die Übertragungsleitungen vorgesehenen Schieberegistern kann so vorgegangen sein, dass diese in zusätzlichen Registerstufen die jeweils zusätzlich abzugebenden Synchronisierbits enthalten.

Abschliessend sei hier noch angemerkt, dass bei einem Anschluss der Umsetzeinrichtung UE an eine Paketvermittlungsstelle mehrere der Leitungsanschlussmoduln LM75 durch einen für den Anschluss an eine mit einer höheren Übertragungsgeschwindigkeit ausgelegte Übertragungsleitung vorgesehenen Leitungsanschlussmodul ersetzt werden können. So ist es z. B. möglich, fünf Leitungsanschlussmoduln LM75, die jeweils an eine für eine Übertragung mit einer Übertragungsgeschwindigkeit von 9,6 kbit/s ausgelegte Übertragungsleitung anschliessbar sind, durch einen einzigen Leitungsanschlussmodul LM75 zu ersetzen, der an eine für eine Übertragungsgeschwindigkeit von 48 kbit/s ausgelegte Übertragungsleitung des Paketvermittlungsnetzes anschliessbar ist. Sollen mehrere Leitungsanschlussmoduln LM71 bzw. LMA (LM75 bei Anschluss an eine Fernsprechvermittlungsstelle) und mehrere für den Anschluss an eine Paketvermittlungsstelle oder an eine Fernsprechvermittlungsstelle vorgesehene Leitungsanschlussmoduln LM75 miteinander verbunden werden, so kann, wie in Fig. 6 dargestellt, anstelle der bei den Ausführungsbeispielen verwendeten Einzelleitungen auch eine durch den Steuermodul SM steuerbare Koppeleinrichtung K verwendet werden.

Schliesslich können anstelle der Schnittstellenschaltungen P1 bis P8 Einrichtungen verwendet werden, die einen direkten Speicherzugriff auf die Speicher mit wahlfreiem Zugriff der Speicheranordnungen M1 bis M4 zulassen.

**Patentansprüche**

1. Schaltungsanordnung zum Übertragen von durch Datensignale und/oder Signalisierungsinformationen gebildeten Nachrichtensignalen zwischen Teilnehmerstellen (Tx, Ttx), die über Vermittlungsstellen eines mit einer ersten Übertragungsprozedur arbeitenden ersten Vermittlungsnetzes (DVS) und eines über eine Umsetzeinrichtung (UE) mit dem ersten Vermittlungsnetz verbundenen, mit einer von der ersten Übertragungsprozedur verschiedenen zweiten Übertragungsprozedur arbeitenden zweiten Vermittlungsnetzes (PVS) verbunden sind, wobei sich die Übertragungsprozeduren der an einer Verbindung beteiligten Vermittlungsnetze (DVS, PVS) aus die Datensignale enthaltenden netzunabhängigen Prozedurteilen und aus zumindest die Signalisierungsinformationen enthaltenden netzabhängigen, mit Hilfe der Umsetzeinrichtung umzusetzenden Prozedurteilen zusammensetzen, und wobei zumindest das zweite Vermittlungsnetz auf seinen Übertragungsleitungen die Übertragung von Nachrichtensignalen in Form von Paketen gestattet, dadurch gekennzeichnet, dass die Umsetzeinrichtung (UE) über zumindest einen ersten Leitungsanschlussmodul (LM71, LMA, LM75) an Übertragungsleitungen einer Vermittlungsstelle des ersten Vermittlungsnetzes (DVS) und über mindestens einen gesonderten zweiten Leitungsanschlussmodul (LM75) an mindestens eine Übertragungsleitung einer Vermittlungsstelle des zweiten Vermittlungsnetzes (PVS) angeschlossen ist, dass auf der jeweiligen zu dem zweiten Vermittlungsnetz gehörenden Übertragungsleitung für eine Übertragung von Paketen eine vorgegebene Anzahl von virtuellen Kanälen zur Verfügung steht, welchen jeweils eine der mit der Umsetzeinrichtung verbundenen, zu dem ersten Vermittlungsnetz (DVS) gehörenden Übertragungsleitungen fest zugeordnet ist und dass die ersten und zweiten Leitungsanschlussmodule (LM71, LMA, LM75) derart ausgebildet und miteinander verbunden sind, dass sie bei einer Übertragung von Nachrichtensignalen über eine mit ihnen verbundene Übertragungsleitung lediglich die in dem jeweiligen Vermittlungsnetz vorgesehenen netzabhängigen Prozedurteile abwickeln und die zusammen mit den die Abwicklung netzabhängiger Prozedurteile ermöglichenden Signalteilen entsprechend den netzunabhängigen Prozedurteilen auftretenden Datensignale in unveränderter Form an denjenigen Leitungsanschlussmodul abgeben, welcher mit der für die Weiterleitung der Nachrichtensignale in Frage kommenden Übertragungsleitung des jeweils anderen Vermittlungsnetzes verbunden ist, und dass der betreffende Leitungsanschlussmodul dann diese Datensignale mit den von ihm bereitgestellten Signalteilen, die die Abwicklung der in dem in Frage kommenden Vermittlungsnetz vorgesehenen netzabhängigen Prozedurteile ermöglichen, zusammenfasst.

2. Schaltungsanordnung nach Anspruch 1, dadurch gekennzeichnet, dass die Umsetzeinrichtung (UE) mindestens einen mit den ersten und zweiten Leitungsanschlussmoduln (LM71, LM75) verbundenen Steuermodul (SM) aufweist, welcher die Umsetzung von ihm über die Leitungsanschlussmoduln entsprechend der in den Vermittlungsnetzen abzuwickelnden netzabhängigen Prozedurteile zugeführten Signalisierungsinformationen steuert.

3. Schaltungsanordnung nach Anspruch 1 oder 2, dadurch gekennzeichnet, dass die ersten und zweiten Leitungsanschlussmoduln (LM71, LMA, LM75 und LM75) durch Einzelleitungen fest miteinander verbunden sind.

4. Schaltungsanordnung nach Anspruch 2, dadurch gekennzeichnet, dass mehrere der ersten und zweiten Leitungsanschlussmoduln (LM71, LMA, LM75 und LM75) über eine durch den Steuermodul (SM) steuerbare Koppeleinrichtung verbunden sind.

5. Schaltungsanordnung nach einem der Ansprüche 1 bis 4, dadurch gekennzeichnet, dass der jeweilige erste Leitungsanschlussmodul (LM71) der Umsetzeinrichtung (UE) an Übertragungsleitungen einer für eine synchrone Übertragung vorgesehenen Durchschaltevermittlungsstelle (DVS) anschliessbar ist, dass der jeweilige erste Leitungsanschlussmodul (LM71) eine die Abwicklung der über die Übertragungsleitungen einer Durchschaltevermittlungsstelle durchzuführenden Übertragungsprozeduren steuernde Steuerschaltung (CPU1, M1) enthält, die über Schnittstellenschaltungen (P1, P2) mit dem den zweiten Leitungsanschlussmodul(n) (LM75) bzw. mit dem Steuermodul (SM) und über eine oder mehrere von der Steuerschaltung her steuerbare Sende-/Empfangsschaltungen (USART1m HDLC1) mit einer oder mehreren Übertragungsleitungen der Durchschaltevermittlungsstelle verbunden ist, und dass die Sende-/Empfangsschaltungen jeweils eine für die Aufnahme und Umsetzung von ihnen eingangsseitig jeweils zugeführten Signalisierungsinformationen dienende Signalisierungsumsetzschaltung (USART1) und eine Datenübertragungsschaltung (HDLC1) enthalten, die lediglich bei der Datensignalübertragung wirksam ist.

6. Schaltungsanordnung nach Anspruch 5, dadurch gekennzeichnet, dass jeweils eine Signalisierungsumsetzschaltung (USART1) und eine Datenübertragungsschaltung (HDLC1) an einer der Übertragungsleitungen der Durchschaltevermittlungsstelle über eine Datenweiche (DW) angeschlossen sind und dass die Datenweiche (DW) für die Übertragung von Datensignalen und Signalisierungsinformationen von der Steuerschaltung (CPU1, M1) her umschaltbar ist.

7. Schaltungsanordnung nach einem der Ansprüche 1 bis 4, dadurch gekennzeichnet, dass der jeweilige erste Leitungsanschlussmodul (LMA) der Umsetzeinrichtung (UE) an Übertragungsleitungen einer für eine asynchrone Übertragung vorgesehenen Durchschaltevermittlungsstelle (DVS) anschliessbar ist, dass der jeweilige Leitungsanschlussmodul (LMA) eine die Abwicklung der über die Übertragungsleitungen einer Durchschaltevermittlungsstelle (DVS) durchzuführenden Übertragungsprozeduren steuernde Steuerschaltung (CPU2, M2) enthält, die über Schnittenstellenschaltungen (P3, P4) mit dem (den) zweiten Leitungsanschlussmodul(n) (LM75) bzw. mit dem Steuermodul (SM) und über eine oder mehrere von der Steuerschaltung her steuerbare Sende-/Empfangsschaltungen (USART2) eine Parallel-Serien-Umsetzung bzw. Serien-Parallel-Umsetzung der ihr zugeführten Datensignale und Signalisierungsinformationen durchzuführen gestattet.

8. Schaltungsanordnung nach einem der Ansprüche 1 bis 7, dadurch gekennzeichnet, dass der jeweilige zweite bzw. erste Leistungsanschlussmodul (LM75) eine für die Abwicklung der in einem oder mehreren virtuellen Kanälen einer Übertragungsleitung einer die Übertragung der Nachrichtensignale in Form von Paketen ermöglichenden Vermittlungsstelle (PVS) durchzuführenden Übertragungsprozeduren steuernde Steuerschaltung (CPU3, M3) enthält, die über Schnittstellenschaltungen (P5, P6) mit dem (den) ersten bzw. zweiten Leitungsanschlussmodul(n) (LM71, LMA bzw. LM75) bzw. mit dem Steuermodul (SM) und über eine oder mehrere von der Steuerschaltung her steuerbare Sende-/Empfangsschaltungen (HDLC2) mit einer oder mehreren Übertragungsleitungen der die Übertragung der Nachrichtensignale in Form von Paketen ermöglichenden Vermittlungsstelle verbunden ist.

9. Schaltungsanordnung nach einem der Ansprüche 1 bis 8, dadurch gekennzeichnet, dass der Steuermodul (SM) eine den Verbindungsaufbau steuernde Steuerschaltung (CPU4, M4) enthält, die mit den Leitungsanschlussmoduln (LM71, LMA, LM75) über Schnittstellenschaltungen (P7, P8) verbunden ist, über die an die Steuerschaltung (CPU4, M4) den in einem Signale in ankommender Übertragungsrichtung führenden Leitungsanschlussmodul aufgenommenen Signalisierungsinformationen entsprechende Meldungen abgebbar und über die von der Steuerschaltung (CPU4, M4) Aufträge für von einem Signale in abgehender Übertragungsrichtung führenden Leitungsanschlussmodul abzugebene Signalisierungsinformationen abgebbar sind.

10. Schaltungsanordnung nach einem der Ansprüche 5 bis 9, dadurch gekennzeichnet, dass jede der Steuerschaltungen einen Mikroprozessor enthält, der über eine Busleitungsanordnung mit einer Speicheranordnung und den Schnittstellenschaltungen bzw. Sende-/Empfangsschaltungen verbunden ist.

**Claims**

1. A circuit arrangement for transmitting information signals, formed by data signals and/or items of signalling information, between subscriber stations (Tx, Ttx) which are connected via exchanges of a first switching network (DVS), operating in accordance with a first transmission procedure, and a second switching network (PVS) which is connected to the first switching network via a converter device (UE), and which operates in accordance with a second transmission procedure which differs from the first transmission procedure, where the transmission procedures of the switching networks (DVS, PVS) participating in a connection are composed of network-independent procedure components, which contain the data signals, and of network-dependent procedure components which contain at least the items of signalling information and which are to be converted by means of the converter device, and where at least the second switching network permits the transmission of information signals, in the form of packets, on its transmission lines, characterised in that the converter device (UE) is connected via at least one first line connection module (LM71, LMA, LM75) to transmission lines of an exchange of the first switching network (DVS) and via at least one separate, second line connection module (LM75) to at least one transmission line of an exchange of the second switching network (PVS), that on the respective transmission line, assigned to the second switching network, for the transmission of packets, a predetermined number of virtual channels are available, each of which is permanently assigned one of the transmission lines which are connected to the converter device and which are assigned to the first switching network (DVS), and that the first and second line connection modules (LM71, LMA, LM75) are designed to be such and are connected to one another in such manner that when information signals are transmitted via a transmission line to which they are connected, they carry out only the network-dependent procedure components provided in the respective switching network and emit the data signals which occur together with those signal components which facilitate the handling of network-dependent procedure components, in accordance with the network-independent procedure components, in unchanged form to that line connection module which is connected to the transmission line, used to forward the information signals, of the respective other switching network, and that the respective line connection module then combines these data signals with those signal components which it has made available and which facilitate the handling of the network-dependent procedure components provided in the switching network in question.

2. A circuit arrangement as claimed in claim 1, characterised in that the converter device (UE) comprises at least one control module (SM) which is connected to the first and second line connection modules (LM71, LM75) and which controls the conversion of items of signalling information with which it is supplied via the line connection modules in accordance with the network-dependent procedure components which are to be handled in the switching networks.

3. A circuit arrangement as claimed in claim 1 or 2, characterised in that the first and second line connection modules (LM71, LMA, LM75 and LM75) are permanently connected to one another by individual lines.

4. A circuit arrangement as claimed in claim 2, characterised in that a plurality of the first and second line connection modules (LM71, LMA, LM75 and LM75) are connected via a coupling device which can be controlled by the control module (SM).

5. A circuit arrangement as claimed in one of the claims 1 to 4, characterised in that the respective first line connection module (LM71) of the converter device (UE) can be connected to transmission lines of a line switching exchange (DVS) provided for synchronous transmission, that the respective first line connection module (LM71) includes a control circuit (CPU1, M1) which controls the handling of the transmission procedures which are to be carried out via the transmission lines of a line switching exchange and which is connected via interface circuits (P1, P2) to the second line connection module (S) (LM75) and to the control module (SM) and via one or more than one transmitting/receiving circuit (USART1, HDLC1), controllable by the control circuit, to one or more than one transmission line of the line switching exchange, and that the transmitting/receiving circuits each include a signalling converter circuit (USART1) which serves to receive and convert items of signalling information with which they are supplied at their input end, and a data transmission circuit (HDLC1) which is operated only when data signals are transmitted.

6. A circuit arrangement as claimed in claim 5, characterised in that a signalling converter circuit (USART1) and a data transmission circuit (HDLC1) are in each case connected to one of the transmission lines of the line switching exchange via a data selector (DW) and that the data selector (DW) can be switched over by the control circuit (CPU1, M1) for the transmission of data signals and items of signalling information.

7. A circuit arrangement as claimed in one of the claims 1 to 4, characterised in that the respective first line connection module (LMA) of the converter device (UE) can be connected to transmission lines of a line switching exchange (DVS) provided for asynchronous transmission, that the respective line connection module (LMA) includes a control circuit (CPU, M2) which controls the handling of the transmission procedures which are to be carried out via the transmission lines of a line switching exchange (DVS) and which via interface circuits (P3, P4) to the second line connection module (S) (LM75) and to the control module (SM) and, via one or mlore than one transmitting/receiving circuit (USART2) which is controllable by the control circuit, permits the parallel-series conversion and series-parallel conversion of the data signals and items of signalling information with which it is supplied.

8. A circuit arrangement as claimed in one of the claims 1 to 7, characterised in that the respective second or first line connection module (LM5) includes a control circuit (CPU3, M3) which controls the handling of the transmission procedures which are to be carried out in one or more than one virtual channel of a transmission line of an exchange (PVS) which enables the transmission of the information signals in the form of packets, and which is connected via interface circuits (P5, P6) to the first and second line connection module (S) respectively (LM71, LMA and LM75) and to the control module (SM) and via one or more than one transmitting/receiving circuit (HDLC2), controllable by the control circuit, to one or more than one transmission line of the exchange which enables the transmission of the information signals in the form of packets.

9. A circuit arrangement as claimed in one of the claims 1 to 8, characterised in that the control module (SM) includes a control circuit (CPU4, M4) which controls the connection establishment and which is connected to the line connection modules (LM71, LMA, LM75) via interface circuits (P7, P8) via which the control circuit (CPU4, M4) can be supplied with messages which correspond to the items of signalling information received in a line connection module which conducts signals in the incoming transmission direction, and via which the control circuit (CPU4, M4) can emit instructions for items of signalling information to be emitted by a line connection module which conducts signals in the outgoing transmission direction.

10. A circuit arrangement as claimed in one of the claims 5 to 9, characterised in that each of the control circuits includes a microprocessor which is connected via a bus line arrangement to a storage arrangement and to the interface circuits and transmitting/receiving circuits.

**Revendications**

1. Montage pour la transmission de signaux d'informations, formés par des signaux de données et/ou par des informations de signalisation, entre des postes d'abonnés (Tx, Ttx), qui sont reliés par l'intermédiaire de centraux d'un premier réseau de commutation (DVS) opérant avec une première procédure de transmission, et d'un second réseau de commutation (PVS), relié au premier réseau de commutation par l'intermédiaire d'un dispositif de conversion (UE) et opérant avec une seconde procédure de transmission différente de la première procédure de transmission, dans lequel les procédures de transmission des réseaux de commutation (DVS, PVS) intervenant pour la communication, se composent d'éléments de procédure contenant les signaux de transmission de données et indépendants du réseau et d'éléments de procédure contenant au moins les informations de signalisation et dépendant du réseau et devant être convertis à l'aide du dispositif de conversion, et dans lequel au moins le second réseau de commutation permet, dans ses lignes de transmission, la transmission de signaux d'informations sous la forme de paquets, caractérisé par le fait que le dispositif de conversion (UE) est raccordé par l'intermédiaire d'au moins un premier module (LM71, LMA, LM75) de raccordement de lignes à des lignes de transmission d'un central du premier réseau de commutation (DVS) et par l'intermédiaire d'au moins un second module particulier (LM75) de raccordement de lignes à au moins une ligne de transmission d'un central du second réseau de commutation (PVS), que dans la ligne respective de transmission qui appartient au second réseau de commutation, on dispose, pour la transmission de paquets, d'un nombre prédéterminé de canaux virtuels qui est associé de façon fixe respectivement à l'une des lignes de transmission reliées au dispositif de conversion et faisant partie du premier réseau de commutation (DVS), et que les premier et second modules (LM71, LMA, LM75) de raccordement de lignes sont agencés et reliés entre eux de telle sorte que lors d'une transmission de signaux d'informations par l'intermédiaire d'une ligne de transmission qui leur est reliée, ils développent les éléments de procédure qui sont prévus dans le réseau de commutation respectif et sont indépendants du réseau, et délivrent sous une forme inchangée les signaux de données, qui apparaissent de concert avec les éléments de signaux permettant le développement d'éléments de procédure qui dépendent du réseau, en fonction des éléments de procédure qui sont indépendants du réseau, au module de raccordement de lignes, qui est relié à la ligne de transmission, qui intervient pour la retransmission des signaux d'informations, de l'autre réseau de commutation respectif, et que le module considéré de raccordement de lignes réunit alors ces signaux de données aux éléments de signaux, qu'il a préparés et qui permettent le déroulement des éléments de procédure qui sont prévus dans le réseau de commutation considéré et dépendent du réseau.

2. Montage suivant la revendication 1, caractérisé par le fait que le dispositif de conversion (UE) comporte au moins un module de commande (SM), qui est relié aux premier et second modules (LM71, LM75) de raccordement de lignes, et qui commande la conversion d'informations de signalisation qui lui sont envoyées par l'intermédiaire des modules de raccordement de lignes, conformément aux éléments de procédure qui doivent se dérouler dans les réseaux de commutation et dépendent des réseaux.

3. Montage suivant la revendication 1 ou 2, caractérisé par le fait que les premier et second modules (LM71, LMA, LM75 et LM75) de raccordement de lignes sont reliés de façon fixe entre eux par l'intermédiaire de lignes individuelles.

4. Montage suivant la revendication 2, caractérisé par le fait que plusieurs des premier et second modules (LM71, LMA, LM75 et LM75) de raccordement de lignes sont reliés par l'intermédiaire d'un dispositif de couplage pouvant être commandé au moyen du module de commande (SM).

5. Montage suivant l'une des revendications 1 à 4, caractérisé par le fait que le premier module respectif (LM71) de raccordement de lignes du dispositif de conversion (UE) peut être raccordé à des lignes de transmission d'un central d'interconnexion (DVS) prévu pour une transmission synchrone, que le premier module respectif (LM71) de raccordement de lignes contient un circuit de commande (CPU1, M1) commandant le déroulement des procédures de transmission devant être exécutées par l'intermédiaire de lignes de transmission d'un central d'interconnexion, et qui est relié par l'intermédiaire de circuits d'interface (P1, P2) au(x) second(s) module(s) (LM75) de raccordement de lignes ou au module de commande (SM) et par l'intermédiaire d'un ou de plusieurs circuits d'émission/réception (USART1m, HDLC1) pouvant être commandés à partir du circuit de commande, à une ou plusieurs lignes de transmission de l'interface d'interconnexion, et que les circuits d'émission/réception contiennent respectivement un circuit de conversion de signalisation (USART1), servant à réaliser la réception et la conversion d'informations de signalisation qui sont envoyées respectivement à leurs entrées, et un circuit (HDLC1) de transmission de données, qui agit uniquement lors de la transmission de signaux de données.

6. Montage selon la revendication 5, caractérisé en ce que respectivement un circuit de conversion de signalisation (USART1) et un circuit de transmission de données (HDLC1) sont raccordés à l'une de lignes de transmission du central d'interconnexion par l'intermédiaire d'un aiguillage de transmission de données (DW) et que l'aiguillage de transmission de données (DW) peut être commuté à partir du circuit de commande (CPU1, M1), pour la transmission de signaux de données et d'informations de signalisation.

7. Montage suivant l'une des revendications 1 à 4, caractérisé par le fait que le premier module respectif (LM1) de raccordement de lignes du dispositif de conversion (UE) peut être raccordé à des lignes de transmission d'un central d'interconnexion (DVS) prévu pour une transmission asynchrone, que le module respectif (LM1) de raccordement de lignes contient un circuit de commande (CPU2, M2) commandant le déroulement des procédures de transmission devant être exécutées par l'intermédiaire des lignes de transmission d'un central d'interconnexion (DVS), et qui permet, par l'intermédiaire de circuits d'interface (P3, P4) reliés au(x) second(s) module(s) (LM75) de raccordement de lignes ou au module de commande (SM) et par l'intermédiaire d'un ou de plusieurs circuits d'émission/réception (USART2) pouvant être commandés à partir du circuit de commande, l'exécution d'une conversion parallèle-série ou d'une conversion série-parallèle des signaux de données d'information de signalisation, qui leur sont envoyés.

8. Montage suivant l'une des revendications 1 à 7, caractérisé par le fait que le second ou le premier module respectif (LM75) de raccordement de lignes contient un circuit (CPU3, M3) commandant le déroulement des procédures de transmission devant être exécutées dans un ou plusieurs canaux virtuels d'une ligne de transmission d'un central (PVS) permettant la transmission des signaux d'informations sous la forme de paquets, et qui est relié, par l'intermédiaire de circuits d'interface (P5, P6) au(x) premier(s) ou second(s) module(s) (LM71, LMA ou LM75) de raccordement de lignes ou au module de commande (SM) et par l'intermédiaire d'un ou de plusieurs circuits d'émission/réception (HDLC2) pouvant être commandés à partir du circuit de commande, à une ou plusieurs lignes de transmission du central permettant la transmission des signaux d'informations sous la forme de paquets.

9. Montage suivant l'une des revendications 1 à 8, caractérisé par le fait que le module de commande (SM) contient un circuit de commande (CPU4, M4) commandant l'établissement de la liaison et qui est relié aux modules (LM71, LMA, LM75) de raccordement de lignes par l'intermédiaire de circuits d'interface (P7, P8), à l'aide desquels des signalisations correspondant aux informations de signalisation reçues dans un module de raccordement de lignes transmettant des signaux dans le sens de transmission d'arrivée, peuvent être délivrés au circuit de commande (CPU4, M4) et par l'intermédiaire desquels des ordres pour des informations de signalisation devant être délivrées par un module de raccordement de lignes délivrant des signaux dans le sens de transmission de départ, peuvent être délivrés par le circuit de commande (CPU4, M4).

10. Montage suivant l'une des revendications 5 à 9, caractérisé par le fait que chacun des circuits de commande contient un microprocesseur qui est relié par l'intermédiaire d'un dispositif à lignes formant bus à un dispositif de mémoire et aux circuits d'interface ou aux circuits d'émission/réception.

# FIG 1

# FIG 2

LM71

von/zuSM

von/zuLM75

CPU1

M1

USART1

P1

HDLC1

P2

DW

von/zu
ST71

# FIG 3

LMA

CPU2

M2

USART2

P3

P4

von/zu SM

von/zuSTA

von/zuLM75

# FIG 4

# FIG 5